# FASCICULE DE BREVET EUROPEEN

(11) **EP 3 741 157 B1**
(45) Date de publication et mention de la délivrance du brevet: **31.05.2023**
(21) Numéro de dépôt: 18830237.6
(22) Date de dépôt: 18.12.2018
(51) Int. Cl.: H04W 36/32, H04W 36/00, H04W 36/36

(54) **PROCÉDÉ DE MAINTIEN D'UNE CONNEXION SANS FIL ENTRE UN VÉHICULE ET UNE INFRASTRUCTURE**
VERFAHREN ZUR AUFRECHTERHALTUNG EINER DRAHTLOSEN VERBINDUNG ZWISCHEN EINEM FAHRZEUG UND EINER INFRASTRUKTUR
METHOD FOR MAINTAINING A WIRELESS CONNECTION BETWEEN A VEHICLE AND AN INFRASTRUCTURE

(30) Priorité: 18.01.2018 FR 1850393
(43) Date de publication de la demande: 25.11.2020
(73) Titulaire: Renault s.a.s, 92100 Boulogne Billancourt (FR)
(72) Inventeur: PERRAUD, Eric, 31830 Plaisance Du Touch (FR)
(74) Mandataire: Renault Group
(86) Numéro de dépôt international: PCT/EP2018/085653
(87) Numéro de publication internationale: WO 2019/141474

(56) Documents cités:
- US-A1- 2007 127 409
- US-A1- 2012 258 715
- US-A1- 2016 183 129
- MOUTON MAXIMILIEN ET AL: "On the evaluation of make-before-break handovers in urban WiFi networks for moving vehicles", 2013 10TH ANNUAL CONFERENCE ON WIRELESS ON-DEMAND NETWORK SYSTEMS AND SERVICES (WONS), IEEE, 18 mars 2013 (2013-03-18), pages 170-177, XP032476910, DOI: 10.1109/WONS.2013.6578343 ISBN: 978-1-4799-0747-2 [extrait le 2013-08-12]

## Description

### DOMAINE TECHNIQUE AUQUEL SE RAPPORTE L'INVENTION

La présente invention concerne de manière générale les systèmes de communication entre véhicules, généralement dénommés « V2X ».

Elle concerne plus particulièrement un procédé de maintien d'une connexion sans fil entre un véhicule et une infrastructure sur un trajet le long duquel se trouvent des réseaux locaux de communication permettant d'établir une communication entre le véhicule et l'infrastructure. On considérera dans ce procédé qu'à l'état initial, ledit véhicule :
- est repéré sous la couverture d'un premier réseau local de communication,
- est identifié par ce premier réseau local de communication par un premier élément d'identification, et
- communique avec l'infrastructure par un premier port de communication.

Elle concerne également un dispositif de maintien d'une connexion sans fil entre un véhicule et une infrastructure sur un trajet le long duquel se trouvent des réseaux locaux de communication permettant d'établir une communication entre le véhicule et l'infrastructure, ledit dispositif comprenant un équipement utilisateur adapté pour échanger des données avec l'infrastructure, un moyen pour déterminer la position du véhicule, et une mémoire informatique qui enregistre une base de donnée de cartographie routière et une base de donnée d'infrastructures radiofréquences et cellulaires.

### ARRIÈRE-PLAN TECHNOLOGIQUE

L'échange de données entre véhicules, notamment grâce aux systèmes de communication sans fil dénommés « V2X », est aujourd'hui un moyen efficace de fournir au conducteur des informations et alertes anticipées sur son environnement, en particulier concernant des événements se produisant en dehors de son champ de vision.

Deux modes de communication entre véhicules sont connus. Le premier mode, appelé PC5 (ou « V2V »), repose sur une communication directe entre les véhicules. Dans ce cadre, les véhicules sont équipés de modules 4G et les communications se font sous le contrôle des stations 4G présentes dans l'environnement des véhicules.

Le deuxième mode de communication, appelé mode Uu (ou « V2I »), s'appuie sur la transmission de données entre les véhicules via une infrastructure de communication de réseaux mobiles (ou LTE pour « Long Term Evolution » selon l'acronyme couramment utilisé). Concrètement, un véhicule transmet un message à un serveur dit « V2X » via un port de communication associé à une adresse IP liée au véhicule. Le serveur « V2X » redistribue localement le message aux véhicules présents dans la zone géographique concernée.

Le mode Uu est particulièrement intéressant lorsqu'il s'agit de transmettre par exemple une alerte à tous les véhicules présents dans une zone géographique particulière. Cependant, des interruptions de communication peuvent être observées, notamment lors des transitions de couverture d'un réseau mobile à un autre ou lors des transitions de couverture entre deux réseaux locaux d'un même réseau mobile.

En l'arrière-plan technologique, le document US2012258715 décrit des systèmes et procédés pour faciliter des transferts verticaux efficaces dans un système de communication sans fil.

De même, le document US2007127409 décrit un dispositif de communication sans fil et un procédé d'utilisation de ce dispositif de communication sans fil dans le but de masquer la technologie radio sous-jacente à un utilisateur d'un téléphone qui passerait des appels sur WLAN ou sur un réseau cellulaire.

On connait du document WO2017126948 une méthode permettant d'assurer la continuité du service de transmission/réception de données via une connexion « V2X » lors de la transition d'un réseau à un autre. Pour cela, le document WO2017126948 propose l'utilisation du mode PC5 de communication directe entre véhicules lors de la transition de réseaux. La transmission n'est ainsi pas interrompue. Cependant, cette méthode nécessite la présence de modem 4G adapté au mode PC5 dans tous les véhicules. De plus, pendant cette période de transition, les messages transmis directement entre véhicules ne seraient pas remontés au niveau de l'infrastructure de communication. Des informations pertinentes permettant par exemple d'optimiser le trafic risqueraient alors d'être perdues.

### OBJET DE L'INVENTION

La présente invention propose d'améliorer la continuité du service de transmission/réception de données via une connexion « V2X » en garantissant le maintien de la connexion lors de la transition d'un réseau local de communication à un autre.

Plus particulièrement, on propose selon l'invention un procédé de maintien d'une connexion sans fil entre un véhicule et une infrastructure tel que défini dans l'introduction, le procédé comportant des étapes de :
- détermination d'au moins un deuxième réseau local de communication couvrant potentiellement une partie suivante du trajet du véhicule,
- génération d'un deuxième élément d'identification du véhicule associé au deuxième réseau local de communication,
- allocation d'au moins un deuxième port de communication adapté à établir une transmission de données entre le véhicule et l'infrastructure sous la couverture du deuxième réseau local de communication,
- recherche du début de couverture du deuxième réseau local de communication, puis
- lors de l'entrée du véhicule sous la couverture du deuxième réseau local de communication, établissement d'une communication entre le véhicule et l'infrastructure via le deuxième port de communication, en utilisant le deuxième élément d'identification.

Ainsi, grâce à la présente invention, la transition d'un réseau local de communication à un autre est anticipée lors de la progression du véhicule sur son trajet. Tous les éléments permettant la connexion avec le réseau local de communication couvrant la partie suivante de trajet sont mis en place avant que le véhicule n'entre effectivement sous la couverture de ce réseau local. Ainsi, lorsque le véhicule passe effectivement sous la couverture du deuxième réseau local de communication couvrant la partie suivante du trajet, la connexion entre le véhicule et l'infrastructure n'est pas interrompue.

D'autres caractéristiques non limitatives et avantageuses du procédé de maintien conforme à l'invention, prises individuellement ou selon toutes les combinaisons techniquement possibles, sont les suivantes :
- il est prévu une étape de détermination d'un intervalle de temps correspondant à une période dans laquelle le véhicule devrait rejoindre la couverture du deuxième réseau local de communication et une étape de désaffectation du deuxième port de communication si aucune donnée n'est transmise par ledit deuxième port de communication dans l'intervalle de temps déterminé ;
- il est prévu une étape de détermination d'un intervalle de temps correspondant à une période dans laquelle le véhicule devrait rejoindre la couverture du deuxième réseau local de communication et une étape de désaffectation du premier port de communication si au moins une donnée est transmise par ledit deuxième port de communication dans l'intervalle de temps déterminé ;
- il est prévu une étape de détermination d'un intervalle de temps correspondant à une période dans laquelle le véhicule devrait rejoindre la couverture du deuxième réseau local de communication, une étape de libération d'une deuxième ressource allouée par le deuxième réseau local de communication si aucune donnée n'est transmise par ledit deuxième port de communication dans l'intervalle de temps déterminé et une étape de libération d'une première ressource allouée par le premier réseau local de communication si au moins une donnée est transmise par ledit deuxième port de communication dans l'intervalle de temps déterminé ;
- il est également prévu dans le procédé, à l'étape de détermination de l'intervalle de temps, d'utiliser une base de données de cartographie routière et/ou une base de donnée d'état des routes et/ou une base de donnée d'état du trafic et/ou une base de donnée d'infrastructures radiofréquences et cellulaires et/ou un paramètre de conduite associé au véhicule et stocké dans une mémoire informatique et/ou des données de position et de vitesse dudit véhicule ;
- il est également prévu dans le procédé, à l'étape de détermination du deuxième réseau local de communication, d'utiliser une base de données de cartographie routière et/ou une base de donnée d'état des routes et/ou une base de donnée d'état du trafic et/ou une base de donnée d'infrastructures radiofréquences et cellulaires et/ou un paramètre de conduite associé au véhicule et stocké dans une mémoire informatique et/ou des données de position et de vitesse dudit véhicule ;
- il est prévu une étape d'établissement d'une correspondance entre le premier élément d'identification et le deuxième élément d'identification ;
- le premier élément d'identification correspond à une première adresse IP et le deuxième élément d'identification correspond à une deuxième adresse IP ;
- il est également prévu que l'étape de détermination du deuxième réseau local de communication soit exécutée au sein d'un serveur de l'infrastructure ;
- il est également prévu que l'étape de détermination du deuxième réseau local de communication soit exécutée au sein d'un calculateur du véhicule ; et
- il est également prévu, à l'étape de détermination, de déterminer une pluralité de seconds réseaux locaux de communication couvrant potentiellement la deuxième partie du trajet.

L'invention propose également un dispositif de maintien d'une connexion sans fil entre un véhicule et une infrastructure comme décrit dans l'introduction, dans lequel il est prévu au moins une unité de traitement de données adaptée pour mettre en oeuvre les étapes suivantes lorsque ledit véhicule est initialement repéré sous la couverture d'un premier réseau local de communication, qu'il est identifié par ce premier réseau local de communication par un premier élément d'identification, et qu'il communique avec l'infrastructure par un premier port de communication :
- détermination d'au moins un deuxième réseau local de communication couvrant potentiellement une partie suivante du trajet du véhicule,
- génération d'un deuxième élément d'identification du véhicule associé au deuxième réseau local de communication,
- allocation d'au moins un deuxième port de communication adapté à établir une transmission de données entre le véhicule et l'infrastructure sous la couverture du deuxième réseau local de communication,
- recherche du début de couverture du deuxième réseau local de communication, puis
- lors de l'entrée du véhicule sous la couverture du deuxième réseau local de communication, établissement d'une communication entre le véhicule et l'infrastructure via le deuxième port de communication, en utilisant le deuxième élément d'identification.

### DESCRIPTION DÉTAILLÉE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un véhicule automobile connecté à un réseau sans fil ;
- la figure 2 représente schématiquement les différentes entités mises en jeu dans un procédé conforme à l'invention ;
- la figure 3 représente sous forme de logigramme un premier exemple de procédé conforme à l'invention ; et
- la figure 4 représente sous forme de logigramme un deuxième exemple de procédé conforme à l'invention.

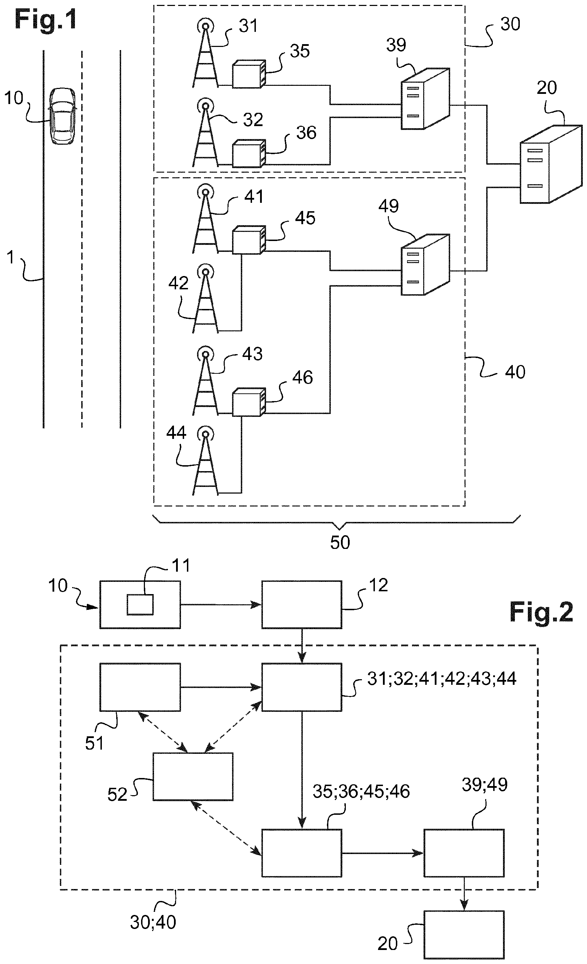

Sur la figure 1, on a représenté un véhicule automobile 10 roulant sur une route 1 afin de suivre un trajet déterminé.

On a également représenté le long de cette route le réseau 50 qui permet au véhicule automobile 10 de communiquer avec l'extérieur, et notamment avec un serveur Internet (ci-après appelé serveur V2X 20).

Ce réseau 50 comporte notamment des réseaux locaux de communication 30, 40 qui maillent le territoire. On a ici représenté deux réseaux locaux de communication 30, 40, dont l'un est situé à proximité du véhicule 10 et dont l'autre est situé plus loin sur le trajet du véhicule 10. Dans cette situation, le véhicule 10 se trouve sous la couverture du premier réseau local de communication 30, mais en dehors de celle du second réseau local de communication 40.

L'échange de données entre véhicules via l'utilisation de ce réseau 50 met en jeu différentes entités qui permettent la transmission de données.

La figure 2 représente schématiquement les différentes entités qui interviennent dans la transmission de données et qui sont mises en jeu dans le procédé de l'invention décrit ci-après.

Dans le cadre de cette description, la transmission de données concerne des données de requête afin d'établir une connexion Internet avec une infrastructure ou/et des données d'information concernant par exemple l'état du trafic ou relatives au véhicule.

Le véhicule 10 comprend un équipement utilisateur 11. Cet équipement utilisateur 11 constitue l'entité permettant d'émettre (ou de recevoir) des données. En pratique, il peut par exemple s'agir d'un téléphone mobile, d'un smartphone, d'une tablette tactile ou d'un ordinateur portable. Il peut également s'agir d'un appareil informatique intégré au véhicule 10. L'équipement utilisateur 11 est adapté pour établir une connexion radiofréquence avec une antenne radio 12.

Le véhicule 10 (via l'équipement utilisateur 11) est identifié pour cette connexion radiofréquence par un identifiant temporaire de réseau radio cellulaire (ou C-RNTI pour « *Cell-Radio Network Temporary Identity* » selon l'acronyme couramment utilisé).

Lorsque que le véhicule 10 est identifié, la liaison radiofréquence permet d'établir une connexion entre l'équipement utilisateur 11 et une station de base 31, 32, 41, 42, 43, 44 du réseau 50.

La station de base 31, 32, 41, 42, 43, 44 correspond à une station eNodeB (pour « *evolved Node B »* selon l'appellation d'origine anglo-saxonne couramment utilisée pour le réseau 4G). Cette station permet d'accéder au réseau 4G également appelé eUTRAN (pour « *evolved Universal Terrestrial Radio Access Network* »). Cette station de base 31, 32, 41, 42, 43, 44 réalise donc une passerelle entre l'antenne radio 12 et le coeur du réseau 51.

Le coeur du réseau 51 correspond à la partie centrale du réseau 4G. Les différentes stations de base 31, 32, 41, 42, 43, 44 sont contrôlées par le coeur du réseau 51.

Ici, ces stations de base 31, 32, 41, 42, 43, 44 servent d'intermédiaires pour établir la connexion avec le réseau externe sans avoir besoin de remonter jusqu'au coeur du réseau 51 et de traverser tout le coeur de réseau 51. Cette configuration permet d'optimiser le critère de latence dans la transmission des données jusqu'au serveur V2X.

Le véhicule 10 est également identifié auprès de chaque station de base 31, 32, 41, 42, 43, 44 par un identifiant temporaire de réseau radio cellulaire (C-RNTI) propre à chaque station de base 31, 32, 41, 42, 43, 44.

Le coeur du réseau 51 connait le véhicule 10 par un numéro d'identification TMSI (pour « *Temporary Mobile Subscriber Identity* »). Ce numéro d'identification TMSI est attribué par un contrôleur MME 52 (pour « *Mobility Management Entity* »). Le numéro d'identification TMSI est attribué lors de la connexion du véhicule 10 au réseau 50. Le contrôleur MME 52 est adapté pour gérer la mobilité du véhicule 10 dans le réseau 50. En particulier, le contrôleur MME 52 communique par exemple une information de changement de station de base 31, 32, 41, 42, 43, 44 au véhicule 10.

Comme représenté sur les figures 1 et 2, l'acheminement des données de l'équipement utilisateur 11 vers le réseau Internet d'un opérateur s'effectue ensuite de la station de base 31, 32, 41, 42, 43, 44 vers une passerelle régionale 35, 36, 45, 46 (dite passerelle SGW, ou « *Serving Gateway* » selon l'appellation d'origine anglo-saxonne couramment utilisée).

Comme le montre l'exemple illustré sur la figure 1, il peut aussi bien être prévu une passerelle régionale 35, 36 par station de base 31, 32, ou plusieurs passerelles régionales 45, 46 par station de base 41, 42, 43, 44.

Comme le montre la figure 2, la passerelle régionale 35, 36, 45, 46 collecte les données provenant de l'équipement utilisateur 11 et les transmet à une entité PGW 39, 49 (pour « *Packet Gateway* »).

L'entité PGW 39, 49 constitue, pour un réseau local de communication HLN (nommé réseau local 30, 40 dans la suite de cette description), une porte d'entrée sur le réseau Internet qui permettra ensuite l'acheminement des données jusqu'au serveur V2X 20. Le serveur V2X 20 correspond ainsi à l'infrastructure à laquelle le véhicule 10 souhaite communiquer des données.

Le serveur V2X 20 et le réseau local 30, 40 connaissent le véhicule 10 par une adresse IP (pour « *Internet Protocol* »). Cette adresse IP est allouée par l'entité PGW 39, 49.

En résumé, le véhicule 10 est identifié par différents identifiants (identifiant temporaire de réseau radio cellulaire C-RNTI, numéro TMSI, adresse IP) en fonction de l'entité concernée. Le contrôleur MME 52 est adapté pour établir la cohérence entre ces différents identifiants du véhicule. Par exemple, lors d'une requête de connexion du véhicule au serveur V2X 20, le numéro TMSI est inséré dans le message de requête. Le contrôleur MME 52 peut alors établir une relation de concordance entre l'identifiant temporaire de réseau radio cellulaire C-RNTI, le numéro TMSI et l'adresse IP.

Comme cela est représenté sur la figure 1, le trajet du véhicule 10 va se trouver sous la couverture de plusieurs réseaux locaux 30, 40. Le procédé de l'invention propose une méthode afin de maintenir la transmission de données entre le véhicule 10 et le serveur V2X 20 lors du changement d'un réseau local 30, 40 à un autre (c'est-à-dire lorsque le véhicule avance sur le trajet).

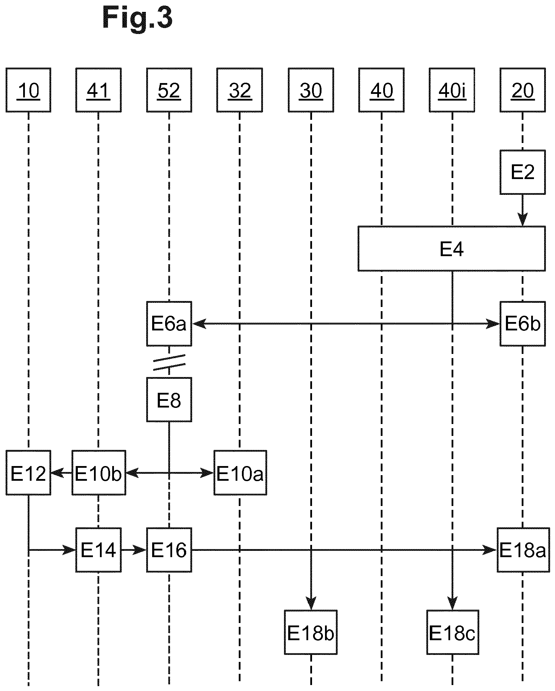

La figure 3 représente un premier mode de réalisation d'un procédé permettant de maintenir la connexion sans fil entre le véhicule 10 et le serveur V2X 20 sur le trajet.

On se place dans le cas où une connexion a déjà été établie entre le véhicule 10 et le serveur V2X 20 via un premier réseau local 30. Une première adresse IP₁ permet l'identification du véhicule 10 par le serveur V2X 20 et par le premier réseau local 30. Pendant cette session de connexion, le serveur V2X 20 reçoit notamment des informations sur la localisation et la vitesse du véhicule 10 en temps réel (obtenues grâce à la présence de moyens permettant de déterminer la vitesse et la position du véhicule 10, tels qu'un capteur de vitesse de roues et un capteur GPS).

Dans ce premier exemple, le serveur V2X 20 comprend une unité de traitement adaptée pour mettre en oeuvre le procédé en lien avec les différentes entités intervenant dans le procédé, notamment les stations de base 31, 32, 41, 42, 43, 44, le contrôleur MME 52 et l'entité PGW 39, 49.

Comme représenté sur la figure 3, le procédé débute à l'étape E2. Lors de cette étape E2, le serveur V2X 20 identifie que le véhicule 10 va prochainement quitter la couverture du premier réseau local 30.

Cette constatation est réalisée par exemple compte tenu de la position géolocalisée du véhicule 10 et d'une base de données de cartographie routière qui est couplée à une base de données d'infrastructures radiofréquences et cellulaires pour faire apparaître les différents réseaux locaux dans une zone prédéterminée (en Europe par exemple).

A la suite de cette constatation, toujours lors de l'étape E2, le serveur V2X 20 détermine des réseaux locaux potentiels pouvant couvrir la partie suivante de trajet.

Pour la détermination des réseaux locaux potentiels, le serveur V2X utilise la base de données de cartographie routière, ainsi que la destination que le conducteur a renseignée sur son équipement utilisateur 11. Il peut également utiliser d'autres données. A titre d'exemple, il peut utiliser une base de donnée d'état des routes et/ou une base de donnée d'état du trafic et/ou un paramètre de conduite associé au véhicule et stocké dans une mémoire informatique et/ou des données de position et de vitesse dudit véhicule 10.

Dans la suite de cette description, on note 40ᵢ ces réseaux locaux potentiels.

A l'étape E4, le serveur V2X 20 transmet une consigne de pré-allocation d'une nouvelle adresse IPᵢ à chaque réseau local potentiel 40ᵢ (plus précisément à chaque entité 49 de chaque réseau local potentiel 40ᵢ). Le serveur V2X 20 transmet également la première adresse IP₁ à chaque réseau potentiel 40ᵢ afin que chaque réseau potentiel 40ᵢ puisse associer la première adresse IP₁ à chaque nouvelle adresse IPᵢ.

Le serveur V2X 20 détermine également, pour chaque réseau potentiel 40ᵢ, un intervalle de temps correspondant à la période pendant laquelle le véhicule 10 est susceptible de rejoindre la couverture du réseau local potentiel 40ᵢ concerné.

On note t_{1,i} l'instant le plus tôt auquel le véhicule 10 devrait rejoindre le réseau local potentiel 40ᵢ. On note t_{2,i} l'instant le plus tard auquel le véhicule 10 devrait rejoindre le réseau local potentiel 40ᵢ. La nouvelle adresse IPᵢ pourra donc être activée pendant l'intervalle de temps [t_{1,i}; t_{2,i}].

Ces instants pourront être prédéterminés et invariables. Toutefois, de façon préférentielle, ils seront déterminés compte tenu de la position géolocalisée du véhicule 10 et de la base de données de cartographie routière couplée à la base de données d'infrastructures radiofréquences et cellulaires.

Comme représenté sur la figure 3, à l'étape E6a, chaque réseau local potentiel 40ᵢ transmet au contrôleur MME 52 la nouvelle adresse IPᵢ. Puisqu'à l'étape E4, la nouvelle adresse IPᵢ et la première adresse IP₁ ont été associées, le contrôleur MME 52 peut assurer la cohérence des identifiants du véhicule 10 en associant l'identifiant temporaire de réseau radio cellulaire C-RNTI et le numéro TMSI à la nouvelle adresse IPᵢ.

Dans le même temps, à l'étape E6b, chaque réseau local potentiel 40ᵢ transmet chaque nouvelle adresse IPᵢ au serveur V2X 20. Pour chaque nouvelle adresse IPᵢ, le serveur V2X 20 pré-alloue ensuite un nouveau port de communication. Ce nouveau port de communication est prévu pour permettre une transmission de données entre le véhicule 10 et le serveur V2X 20 sous la couverture du réseau local associé 40ᵢ. Le serveur V2X 20 pré-alloue également de nouvelles ressources, associées à chaque réseau local potentiel 40ᵢ, qui seront nécessaires pour effectuer cette transmission de données. Par exemple, il peut s'agir de ressources de mémoire permettant de mémoriser les données à transmettre à d'autres véhicules.

La création par anticipation des outils nécessaires à l'établissement d'une connexion sous la couverture d'un nouveau réseau local permet alors en général d'éviter l'interruption de transmission de données entre le véhicule 10 et le serveur V2X 20.

Le nouveau port de communication et les nouvelles ressources pourront également être activés pendant l'intervalle de temps [t_{1,i}; t_{2,i}].

A l'étape E8, le contrôleur MME 52 a identifié que le véhicule 10 entrait sous la couverture d'un deuxième réseau local 40. Ce deuxième réseau local 40 faisait partie de l'un des réseaux locaux potentiels 40ᵢ identifiés à l'étape E2 par le serveur V2X 20.

Le contrôleur MME 52 traduit la transition de réseau local en déclenchant un transfert intercellulaire (ou « *handover* » selon l'appellation anglo-saxonne couramment utilisée) entre une première station de base 32, associée au premier réseau local 30, et une deuxième station de base 41, associée au deuxième réseau local 40.

Lors de cette étape E8, le contrôleur MME 52 détruit les couples associant la première adresse IP₁ à chaque nouvelle adresse IPᵢ, à l'exception du couple associant la première adresse IP₁ à la nouvelle adresse (notée IP₂) du deuxième réseau local 40 (celui dans lequel le véhicule 10 vient d'entrer).

A l'étape E10a, le contrôleur MME 52 envoie, via le transfert intercellulaire, la consigne de déconnexion à la première station de base 32. Simultanément, à l'étape E10b, le contrôleur MME 52 envoie une consigne de connexion à la deuxième station de base 41. Lors de cette étape E10b, le contrôleur MME 52 transmet également la deuxième adresse IP₂ (associée à tous les identifiants du véhicule 10) à la première station de base 32.

Ce transfert intercellulaire (combinaison des étapes E10a et E10b) est la seule phase qui peut être à l'origine d'une éventuelle interruption de connexion. Cependant, cette interruption est très courte, car inférieure à 50 ms. Cette interruption est beaucoup plus courte que celle liée à la perte de l'adresse IP qui intervient lors des procédés de connexion sans fil usuellement mis en place.

La deuxième station de base 41 envoie ensuite, à l'étape E12 et grâce à la liaison radiofréquence, la deuxième adresse IP₂ au véhicule 10 dans les messages protocolaires du transfert intercellulaire régissant la transition de la première station de base 32 vers la deuxième station de base 41. Le véhicule 10 peut alors actualiser les paramètres de connexion lui permettant d'échanger des données avec le serveur V2X 20 sous la couverture du deuxième réseau local 40.

A l'étape E14, le véhicule 10 informe la deuxième station de base 41 de la bonne réalisation du transfert intercellulaire ainsi que de l'actualisation des éléments de connexion.

La deuxième station de base 41 transmet cette information au contrôleur MME 25 à l'étape E16. Le contrôleur MME 52 confirme l'utilisation de la deuxième adresse IP₂ pour la connexion au serveur V2X 20.

A l'étape E18a, des données sont reçues par le serveur V2X 20 de la part du véhicule 10, via la nouvelle connexion établie (sous la couverture du deuxième réseau local 40) et l'utilisation du deuxième port de communication. Ces données sont reçues par le serveur V2X 20 pendant l'intervalle de temps [t_{1,2}; t_{2,2}].

La réception de ces données par le serveur V2X 20 entraîne la désaffectation du premier port de communication (étape E18b). Comme ce premier port de communication était associé à la couverture du premier réseau local 30, il ne recevra pas de données à transmettre sous la couverture du deuxième réseau local 40. Cela entraîne également la libération des ressources allouées pour la transmission de données par le premier réseau local 30.

La réception de ces données par le serveur V2X 20 en provenance du deuxième port de communication entraîne également, à l'étape E18c, la désaffectation des ports de communication associés aux réseaux locaux potentiels 40ᵢ autres que le second réseau local 40 (qui ne recevront donc pas de données pendant l'intervalle de temps [t_{1,i}; t_{2,i}] car ils ne correspondaient pas aux réseaux locaux couvrant effectivement la partie du trajet du véhicule 10). Cela entraîne également la libération des ressources allouées pour la transmission de données par ces réseaux locaux potentiels 40ᵢ.

Une fois que le serveur V2X 20 reçoit les nouvelles données de la part du véhicule 10, par exemple dans le cas d'informations sur le trafic le long du trajet du véhicule 10, le serveur V2X peut déclencher la transmission de ces données aux autres véhicules présents dans la zone géographique concernée.

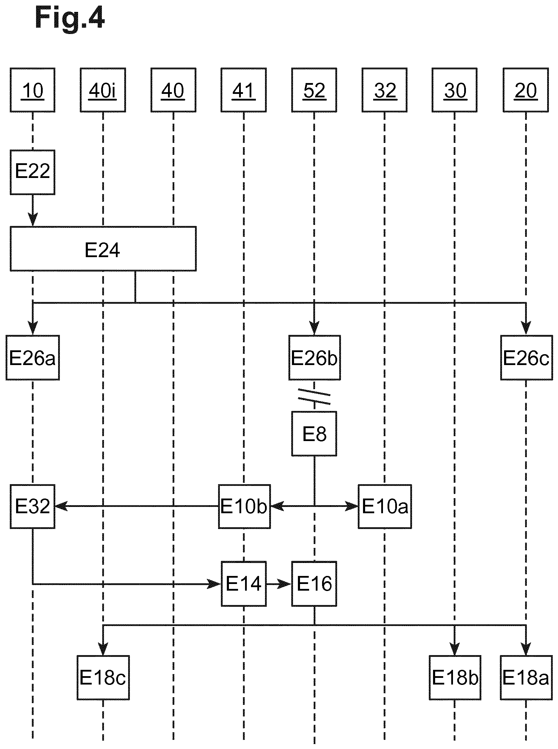

La figure 4 représente un deuxième exemple de procédé conforme à l'invention. Les étapes communes aux figures 3 et 4 portent les mêmes références et ne seront pas décrites à nouveau dans la suite.

Comme pour l'exemple proposé sur la figure 3, on se place dans le cas où une connexion a déjà été établie entre le véhicule 10 et le serveur V2X 20 via un premier réseau local 30. Une première adresse IP₁ permet l'identification du véhicule par le serveur V2X 20 et le premier réseau local 30.

D'après la figure 4, le procédé débute à l'étape E22. Lors de cette étape E22, un calculateur du véhicule 10 identifie que le véhicule quittera prochainement la couverture du premier réseau local 30. Ce calculateur constitue l'unité de traitement adaptée pour mettre en place ce deuxième exemple du procédé.

La constatation de changement de couverture réseau est ici encore réalisée compte tenu de la position géolocalisée du véhicule 10 et d'une base de données de cartographie routière qui est couplée à une base de donnée d'infrastructures radiofréquences et cellulaires faisant apparaître les différents réseaux locaux dans une zone prédéterminée (en Europe par exemple). Ces bases de données peuvent être embarquées dans le calculateur du véhicule 10 ou peuvent être stockées ailleurs, par exemple dans le serveur V2X 20.

A la suite de cette constatation, le calculateur du véhicule 10 détermine des réseaux locaux potentiels pouvant couvrir la partie suivante de trajet. Pour la détermination des réseaux locaux potentiels 40ᵢ, le calculateur du véhicule 10 utilise les mêmes bases de données.

A l'étape E24, le véhicule 10 transmet une consigne de pré-allocation d'une nouvelle adresse IPᵢ à chaque réseau local potentiel 40ᵢ (plus précisément à chaque entité PGW 49 de chaque réseau local potentiel 40ᵢ). Le véhicule 10 transmet également la première adresse IP₁ à chaque réseau potentiel 40ᵢ afin que chaque réseau potentiel 40ᵢ puisse associer la première adresse IP₁ à la nouvelle adresse IPᵢ correspondante.

Le calculateur du véhicule 10 détermine également, pour chaque réseau potentiel 40ᵢ, un intervalle de temps [t_{1,i}; t_{2,i}] correspondant à la période pendant laquelle le véhicule 10 est susceptible de rejoindre la couverture du réseau local potentiel 40ᵢ concerné.

Comme représenté sur la figure 4, à l'étape E26a, chaque réseau local potentiel 40ᵢ transmet au calculateur du véhicule la nouvelle adresse IPᵢ pré-allouée.

Dans le même temps, à l'étape E26b, chaque réseau local potentiel 40ᵢ transmet au contrôleur MME 52 la nouvelle adresse IPᵢ. Puisqu'à l'étape E24, la nouvelle adresse IPᵢ et la première adresse IP₁ ont été associées, le contrôleur MME 52 peut assurer la cohérence des identifiants du véhicule 10 en associant l'identifiant temporaire de réseau radio cellulaire C-RNTI et le numéro TMSI à la nouvelle adresse IPᵢ.

Dans le même temps encore, à l'étape E26c, chaque réseau local potentiel 40ᵢ transmet chaque nouvelle adresse IPᵢ au serveur V2X 20. Pour chaque nouvelle adresse IPᵢ, le serveur V2X 20 pré-alloue ensuite un nouveau port de communication et de nouvelles ressources, associées à chaque réseau local potentiel 40ᵢ.

Le procédé se poursuit en des étapes E8 à E10b qui sont similaires à celles présentées dans l'exemple de la figure 3.

Puis, à l'étape E32, le véhicule 10 reçoit l'information du transfert intercellulaire et actualise la deuxième adresse IP₂ dans les paramètres de connexion au serveur V2X 20.

Le procédé se poursuit à nouveau en des étapes E14 à E18c qui sont également similaires à celles présentées dans l'exemple de la figure 3.

L'exemple de la figure 4 présente l'avantage de ne pas être implémenté dans le serveur V2X 20 puisque tout est piloté à partir du véhicule 10. En revanche, la détermination des réseaux locaux potentiels est plus imprécise car le calculateur du véhicule n'est pas en mesure de prévoir à court terme l'évolution du trafic. De plus, l'implémentation du procédé conforme à l'invention dans le calculateur du véhicule est plus complexe car elle nécessite que le calculateur puisse acquérir le maillage de l'infrastructure cellulaire.

Cette invention assure la continuité IP de la connectivité V2X avec un serveur V2X 20 en anticipant le changement de réseau local 4G 30 vers un autre réseau local 4G 40 par une pré-réservation de l'adresse IP sur ce nouveau réseau local pendant une durée limitée, l'anticipation étant notamment permise par la connaissance du trajet du véhicule. Ces réservations dynamiques sont donc indépendantes de la technologie radio, une seule technologie radio étant utilisée (dans le mode de réalisation préférentiel la technologie radio utilisée étant la 4G) mais sont liées à la mobilité du véhicule 10. Ce procédé de maintien d'une connexion sans fil entre le véhicule 10 et le serveur 20 sur un trajet le long duquel se trouvent des réseaux locaux de communication 30, 40 connectés audit serveur permettant d'établir une communication entre le véhicule 10 et le serveur 20, le véhicule 10 étant initialement repéré sous la couverture d'un premier réseau local de communication 30, le véhicule étant identifié par ce premier réseau local de communication par une adresse IP IP₁, et le véhicule 10 communiquant avec le serveur 20 par un premier port de communication, comporte des étapes de :
- détermination d'au moins un deuxième réseau local de communication 40 couvrant potentiellement une partie suivante du trajet du véhicule,
- pré-réservation provisoire d'une adresse IP IP_{2,i} du véhicule 10 sur chaque réseau local de communication couvrant potentiellement une partie suivante du trajet du véhicule 40,
- allocation temporaire d'au moins un deuxième port de communication sur chaque réseau local de communication 40 couvrant potentiellement une partie suivante du trajet du véhicule et adapté à établir une transmission de données entre le véhicule 10 et le serveur 20 sous la couverture de chaque réseau local de communication 40,
- recherche du début de couverture du deuxième réseau local de communication 40 et identification du nouveau réseau local de communication 40 parmi les réseaux locaux de communication 40 précédemment déterminés, puis
- lors de l'entrée du véhicule 10 sous la couverture du deuxième réseau local de communication 40, établissement d'une communication entre le véhicule 10 et le serveur 20 via le deuxième port de communication qui a été temporairement alloué sur le nouveau réseau local de communication, en utilisant l'adresse IP qui a été préréservée IP_{2,i} sur ce réseau local de communication 40 et en communiquant cette adresse IP_{2,i} au véhicule, laquelle devient la nouvelle adresse IP du véhicule.

L'étape de détermination d'au moins un deuxième réseau local de communication 40 couvrant potentiellement une partie suivante du trajet du véhicule est effectuée :
- soit sans connaître le trajet du véhicule, les deuxièmes réseaux locaux 40 sont par exemple ceux qui correspondent aux stations de base voisines de celle où se trouve mon véhicule
- soit en connaissant le trajet du véhicule, les deuxièmes réseaux locaux 40 sont par exemple ceux qui correspondent à la fois à des stations de base voisines de celle où se trouve mon véhicule et qui couvrent le trajet du véhicule en utilisant notamment une base de donnée d'infrastructures radiofréquences et cellulaires.

Si l'étape de détermination d'au moins un deuxième réseau local de communication 40 est exécutée au sein d'un serveur de l'infrastructure 20, l'étape de pré-réservation de l'adresse IP et de pré-allocation d'un port de communication sur chaque deuxième réseau local de communication est initiée par ce serveur 20 et au moment où le véhicule 10 passe sous la couverture du deuxième réseau local la nouvelle adresse IP du véhicule est communiquée au véhicule par un message de signalisation de la technologie sans fil utilisée (et en particulier en utilisant un message handover si la technologie sans fil est une technologie cellulaire). Alternativement, si l'étape de détermination d'au moins un deuxième réseau local de communication 40 est exécutée au sein du calculateur du véhicule 10, l'étape de pré-réservation de l'adresse IP et de pré-allocation d'un port de communication sur chaque deuxième réseau local de communication 40 est déclenchée par le véhicule 10 grâce à un tunnel IP que le véhicule a établi avec chaque deuxième réseau local de communication, le portail de chaque réseau local notifiant le véhicule de l'adresse préréservée sur ce réseau local et, au moment où le véhicule passe sous la couverture du deuxième réseau local 40, le véhicule 10 utilise l'adresse IP qui a été préréservée par ce deuxième réseau local 40.

## Revendications

1. Procédé de maintien d'une connexion sans fil entre un véhicule (10) et une infrastructure (20) sur un trajet le long duquel se trouvent des réseaux locaux de communication (30, 40) permettant d'établir une communication entre le véhicule (10) et l'infrastructure (20), ledit véhicule (10) étant initialement repéré sous la couverture d'un premier réseau local de communication (30), le véhicule étant identifié par ce premier réseau local de communication par un premier élément d'identification (IP₁), et le véhicule (10) communiquant avec l'infrastructure (20) par un premier port de communication, le procédé comportant des étapes de :
- détermination d'au moins un deuxième réseau local de communication (40) couvrant potentiellement une partie suivante du trajet du véhicule,
- génération d'un deuxième élément d'identification (IP₂) du véhicule (10) associé au deuxième réseau local de communication (40),
- allocation d'au moins un deuxième port de communication adapté à établir une transmission de données entre le véhicule (10) et l'infrastructure (20) sous la couverture du deuxième réseau local de communication (40),
- recherche du début de couverture du deuxième réseau local de communication (40), puis
- lors de l'entrée du véhicule (10) sous la couverture du deuxième réseau local de communication (40), établissement d'une communication entre le véhicule (10) et l'infrastructure (20) via le deuxième port de communication, en utilisant le deuxième élément d'identification (IP₂).

2. Procédé de maintien selon la revendication 1, comprenant également des étapes de :
- détermination d'un intervalle de temps correspondant à une période dans laquelle le véhicule (10) devrait rejoindre la couverture du deuxième réseau local de communication (40) ; et
- désaffectation du deuxième port de communication si aucune donnée n'est transmise par ledit deuxième port de communication dans l'intervalle de temps déterminé.

3. Procédé de maintien selon l'une des revendications 1 et 2, comprenant également des étapes de :
- détermination d'un intervalle de temps correspondant à une période dans laquelle le véhicule (10) devrait rejoindre la couverture du deuxième réseau local de communication (40) ; et
- désaffectation du premier port de communication si au moins une donnée est transmise par ledit deuxième port de communication dans l'intervalle de temps déterminé.

4. Procédé de maintien selon l'une des revendications 1 à 3, comprenant également des étapes de :
- détermination d'un intervalle de temps correspondant à une période dans laquelle le véhicule (10) devrait rejoindre la couverture du deuxième réseau local de communication (40) ;
- libération d'une deuxième ressource allouée par le deuxième réseau local de communication (40) si aucune donnée n'est transmise par ledit deuxième port de communication dans l'intervalle de temps déterminé ; ou
- libération d'une première ressource allouée par le premier réseau local de communication (30) si au moins une donnée est transmise par ledit deuxième port de communication dans l'intervalle de temps déterminé.

5. Procédé de maintien selon l'une quelconque des revendications 2 à 4, dans lequel l'étape de détermination de l'intervalle de temps utilise une base de donnée de cartographie routière et/ou une base de donnée d'état des routes et/ou une base de donnée d'état du trafic et/ou une base de donnée d'infrastructures radiofréquences et cellulaires et/ou un paramètre de conduite associé au véhicule (10) et stocké dans une mémoire informatique et/ou des données de position et de vitesse dudit véhicule (10).

6. Procédé de maintien selon l'une quelconque des revendications 1 à 5, dans lequel l'étape de détermination du deuxième réseau local de communication (40) utilise une base de donnée de cartographie routière et/ou une base de donnée d'état des routes et/ou une base de donnée d'état du trafic et/ou une base de donnée d'infrastructures radiofréquences et cellulaires et/ou un paramètre de conduite associé au véhicule et stocké dans une mémoire informatique et/ou des données de position et de vitesse dudit véhicule (40).

7. Procédé de maintien selon l'une quelconque des revendications 1 à 6, comprenant également une étape d'établissement d'une correspondance entre le premier élément d'identification (IP₁) et le deuxième élément d'identification (IP₂).

8. Procédé de maintien selon l'une quelconque des revendications 1 à 7, dans lequel le premier élément d'identification (IP₁) correspond à une première adresse IP et le deuxième élément d'identification (IP₂) correspond à une deuxième adresse IP.

9. Procédé de maintien selon l'une quelconque des revendications 1 à 8, dans lequel l'étape de détermination du deuxième réseau local de communication (40) est exécutée au sein d'un serveur de l'infrastructure (20).

10. Procédé de maintien selon l'une quelconque des revendications 1 à 8, dans lequel l'étape de détermination du deuxième réseau local de communication (40) est exécutée au sein d'un calculateur du véhicule (10).

11. Procédé de maintien selon l'une quelconque des revendications 1 à 10, dans lequel, à l'étape de détermination, il est prévu de déterminer une pluralité de seconds réseaux locaux de communication (40ᵢ) couvrant potentiellement la deuxième partie du trajet.

12. Dispositif de maintien d'une connexion sans fil entre un véhicule (10) et une infrastructure (20) sur un trajet le long duquel se trouvent des réseaux locaux de communication (30, 40) permettant d'établir une communication entre le véhicule (10) et l'infrastructure (20), ledit dispositif comprenant un équipement utilisateur (11) adapté pour échanger des données avec l'infrastructure (20), un moyen pour déterminer la position du véhicule (10), et une mémoire informatique qui enregistre une base de donnée de cartographie routière et une base de donnée d'infrastructures radiofréquences et cellulaires, le dispositif comprenant: -
au moins une unité de traitement de données adaptée pour mettre en oeuvre les étapes suivantes lorsque ledit véhicule (10) est initialement repéré sous la couverture d'un premier réseau local de communication (30), qu'il est identifié par ce premier réseau local de communication par un premier élément d'identification (IP₁), et qu'il communique avec l'infrastructure (20) par un premier port de communication :
- détermination d'au moins un deuxième réseau local de communication (40) couvrant potentiellement une partie suivante du trajet du véhicule,
- génération d'un deuxième élément d'identification (IP₂) du véhicule (10) associé au deuxième réseau local de communication (40),
- allocation d'au moins un deuxième port de communication adapté à établir une transmission de données entre le véhicule (10) et l'infrastructure (20) sous la couverture du deuxième réseau local de communication (40),
- recherche du début de couverture du deuxième réseau local de communication (40), puis
- lors de l'entrée du véhicule (10) sous la couverture du deuxième réseau local de communication (40), établissement d'une communication entre le véhicule (10) et l'infrastructure (20) via le deuxième port de communication, en utilisant le deuxième élément d'identification (IP₂).

## Patentansprüche

1. Verfahren zur Aufrechterhaltung einer drahtlosen Verbindung zwischen einem Fahrzeug (10) und einer Infrastruktur (20) auf einer Strecke, entlang welcher sich lokale Kommunikationsnetze (30, 40) befinden, die es ermöglichen, eine Kommunikation zwischen dem Fahrzeug (10) und der Infrastruktur (20) herzustellen, wobei das Fahrzeug anfangs unter der Abdeckung eines ersten lokalen Kommunikationsnetzes (30) geortet wird, wobei das Fahrzeug von diesem ersten lokalen Kommunikationsnetz durch ein erstes Identifikationselement (IP₁) identifiziert wird und das Fahrzeug (10) durch einen ersten Kommunikationsanschluss mit der Infrastruktur (20) kommuniziert, wobei das Verfahren folgende Schritte aufweist:
- Bestimmen wenigstens eines zweiten lokalen Kommunikationsnetzes (40), das einen folgenden Abschnitt der Strecke des Fahrzeugs potentiell abdeckt,
- Erzeugen eines zweiten Elements zur Identifikation (IP₂) des Fahrzeugs (10), das dem zweiten lokalen Kommunikationsnetz (40) zugeordnet ist,
- Zuweisen wenigstens eines zweiten Kommunikationsanschlusses, der geeignet ist, eine Datenübertragung zwischen dem Fahrzeug (10) und der Infrastruktur (20) unter der Abdeckung des zweiten lokalen Kommunikationsnetzes (40) herzustellen,
- Suchen des Abdeckungsbeginns des zweiten lokalen Kommunikationsnetzes (40), dann
- beim Eintritt des Fahrzeugs (10) unter die Abdeckung des zweiten lokalen Kommunikationsnetzes (40), Herstellen einer Kommunikation zwischen dem Fahrzeug (10) und der Infrastruktur (20) über den zweiten Kommunikationsanschluss unter Verwendung des zweiten Identifikationselements (IP₂).

2. Aufrechterhaltungsverfahren nach Anspruch 1, ebenfalls umfassend folgende Schritte:
- Bestimmen eines Zeitintervalls, das einer Zeitspanne entspricht, in der das Fahrzeug (10) die Abdeckung des zweiten lokalen Kommunikationsnetzes (40) erreichen sollte; und
- Trennen des zweiten Kommunikationsanschlusses, wenn in dem bestimmten Zeitintervall keine Daten durch den zweiten Kommunikationsanschluss übertragen werden.

3. Aufrechterhaltungsverfahren nach einem der Ansprüche 1 und 2, ebenfalls umfassend folgende Schritte:
- Bestimmen eines Zeitintervalls, das einer Zeitspanne entspricht, in der das Fahrzeug (10) die Abdeckung des zweiten lokalen Kommunikationsnetzes (40) erreichen sollte; und
- Trennen des ersten Kommunikationsanschlusses, wenn in dem bestimmten Zeitintervall wenigstens ein Datenelement durch den zweiten Kommunikationsanschluss übertragen wird.

4. Aufrechterhaltungsverfahren nach einem der Ansprüche 1 bis 3, ebenfalls umfassend folgende Schritte:
- Bestimmen eines Zeitintervalls, das einer Zeitspanne entspricht, in der das Fahrzeug (10) die Abdeckung des zweiten lokalen Kommunikationsnetzes (40) erreichen sollte;
- Freigeben einer zweiten zugewiesenen Ressource durch das zweite lokale Kommunikationsnetz (40), wenn in dem bestimmten Zeitintervall keine Daten durch den zweiten Kommunikationsanschluss übertragen werden; oder
- Freigeben einer ersten zugewiesenen Ressource durch das erste lokale Kommunikationsnetz (30), wenn in dem bestimmten Zeitintervall wenigstens ein Datenelement durch den zweiten Kommunikationsanschluss übertragen wird.

5. Aufrechterhaltungsverfahren nach einem der Ansprüche 2 bis 4, wobei beim Schritt des Bestimmens des Zeitintervalls eine Straßenkartographie-Datenbank und/oder eine Straßenzustands-Datenbank und/oder eine Verkehrslage-Datenbank und/oder einer Datenbank für Funkfrequenz- und Mobilfunkinfrastrukturen und/oder ein Fahrparameter, der dem Fahrzeug (10) zugeordnet ist und in einem Computerspeicher gespeichert ist, und/oder Positions- und Geschwindigkeitsdaten des Fahrzeugs (10) genutzt werden.

6. Aufrechterhaltungsverfahren nach einem der Ansprüche 1 bis 5, wobei beim Schritt des Bestimmens des zweiten lokalen Kommunikationsnetzes (40) eine Straßenkartographie-Datenbank und/oder eine Straßenzustands-Datenbank und/oder eine Verkehrslage-Datenbank und/oder einer Datenbank für Funkfrequenz- und Mobilfunkinfrastrukturen und/oder ein Fahrparameter, der dem Fahrzeug (10) zugeordnet ist und in einem Computerspeicher gespeichert ist, und/oder Positions- und Geschwindigkeitsdaten des Fahrzeugs (40) genutzt werden.

7. Aufrechterhaltungsverfahren nach einem der Ansprüche 1 bis 6, ebenfalls umfassend eine Schritt des Herstellens einer Übereinstimmung zwischen dem ersten Identifikationselement (IP₁) und dem zweiten Identifikationselement (IP₂).

8. Aufrechterhaltungsverfahren nach einem der Ansprüche 1 bis 7,
wobei das erste Identifikationselement (IP₁) einer ersten IP-Adresse und das zweite Identifikationselement (IP₂) einer zweiten IP-Adresse entspricht.

9. Aufrechterhaltungsverfahren nach einem der Ansprüche 1 bis 8, wobei der Schritt des Bestimmens des zweiten lokalen Kommunikationsnetzes (40) innerhalb eines Servers der Infrastruktur (20) ausgeführt wird.

10. Aufrechterhaltungsverfahren nach einem der Ansprüche 1 bis 8, wobei der Schritt des Bestimmens des zweiten lokalen Kommunikationsnetzes (40) innerhalb eines Rechners des Fahrzeugs (10) ausgeführt wird.

11. Aufrechterhaltungsverfahren nach einem der Ansprüche 1 bis 10, wobei es beim Schritt des Bestimmens vorgesehen ist, eine Mehrzahl von zweiten lokalen Kommunikationsnetzen (40ᵢ) zu bestimmen, die den zweiten Abschnitt der Strecke potentiell abdeckten.

12. Vorrichtung zur Aufrechterhaltung einer drahtlosen Verbindung zwischen einem Fahrzeug (10) und einer Infrastruktur (20) auf einer Strecke, entlang welcher sich lokale Kommunikationsnetze (30, 40) befinden, die es ermöglichen, eine Kommunikation zwischen dem Fahrzeug (10) und der Infrastruktur (20) herzustellen, wobei die Vorrichtung ein Benutzergerät (11), das geeignet ist, Daten mit der Infrastruktur (20) auszutauschen, ein Mittel zur Bestimmung der Position des Fahrzeugs (10) und einen Computerspeicher umfasst, der eine Straßenkartographie-Datenbank und eine Datenbank für Funkfrequenz- und Mobilfunkinfrastrukturen speichert, die Vorrichtung umfassend:
- wenigstens eine Datenverarbeitungseinheit, die geeignet ist, die folgenden Schritte durchzuführen, wenn das Fahrzeug (10) anfangs unter der Abdeckung eines ersten lokalen Kommunikationsnetzes (30) geortet wird, es von diesem ersten lokalen Kommunikationsnetz durch ein erstes Identifikationselement (IP₁) identifiziert wird und es durch einen ersten Kommunikationsanschluss mit der Infrastruktur (20) kommuniziert:
- Bestimmen wenigstens eines zweiten lokalen Kommunikationsnetzes (40), das einen folgenden Abschnitt der Strecke des Fahrzeugs potentiell abdeckt,
- Erzeugen eines zweiten Elements zur Identifikation (IP₂) des Fahrzeugs (10), das dem zweiten lokalen Kommunikationsnetz (40) zugeordnet ist,
- Zuweisen wenigstens eines zweiten Kommunikationsanschlusses, der geeignet ist, eine Datenübertragung zwischen dem Fahrzeug (10) und der Infrastruktur (20) unter der Abdeckung des zweiten lokalen Kommunikationsnetzes (40) herzustellen,
- Suchen des Abdeckungsbeginns des zweiten lokalen Kommunikationsnetzes (40), dann
- beim Eintritt des Fahrzeugs (10) unter die Abdeckung des zweiten lokalen Kommunikationsnetzes (40), Herstellen einer Kommunikation zwischen dem Fahrzeug (10) und der Infrastruktur (20) über den zweiten Kommunikationsanschluss unter Verwendung des zweiten Identifikationselements (IP₂).

## Claims

1. Method for maintaining a wireless connection between a vehicle (10) and an infrastructure (20) on a route along which there are local area communication networks (30, 40) that allow communication to be established between the vehicle (10) and the infrastructure (20), said vehicle (10) being initially located within the coverage area of a first local area communication network (30), the vehicle being identified by this first local area communication network by a first identification element (IP₁), and the vehicle (10) communicating with the infrastructure (20) via a first communication port, the method comprising steps of:
- determining at least one second local area communication network (40) potentially covering a subsequent section of the route of the vehicle,
- generating a second identification element (IP₂) of the vehicle (10) associated with the second local area communication network (40),
- allocating at least one second communication port for establishing data transmission between the vehicle (10) and the infrastructure (20) within the coverage area of the second local area communication network (40),
- searching for the beginning of the coverage area of the second local area communication network (40), then
- when the vehicle (10) enters the coverage area of the second local area communication network (40), establishing communication between the vehicle (10) and the infrastructure (20) via the second communication port, using the second identification element (IP₂).

2. Maintaining method according to Claim 1, also comprising steps of:
- determining a time slot corresponding to a period in which the vehicle (10) should reach the coverage area of the second local area communication network (40); and
- unassigning the second communication port if no data are transmitted by said second communication port in the determined time slot.

3. Maintaining method according to either of Claims 1 and 2, also comprising steps of:
- determining a time slot corresponding to a period in which the vehicle (10) should reach the coverage area of the second local area communication network (40); and
- unassigning the first communication port if at least one item of data is transmitted by said second communication port in the determined time slot.

4. Maintaining method according to one of Claims 1 to 3, also comprising steps of:
- determining a time slot corresponding to a period in which the vehicle (10) should reach the coverage area of the second local area communication network (40);
- releasing a second resource allocated by the second local area communication network (40) if no data are transmitted by said second communication port in the determined time slot; or
- releasing a first resource allocated by the first local area communication network (30) if at least one item of data is transmitted by said second communication port in the determined time slot.

5. Maintaining method according to any one of Claims 2 to 4, wherein the step of determining the time slot uses a road map database and/or a road conditions database and/or a traffic conditions database and/or a radiofrequency and cellular infrastructure database and/or a driving parameter associated with the vehicle (10) and stored in a computer memory and/or data on the position and speed of said vehicle (10).

6. Maintaining method according to any one of Claims 1 to 5, wherein the step of determining the second local area communication network (40) uses a road map database and/or a road conditions database and/or a traffic conditions database and/or a radiofrequency and cellular infrastructure database and/or a driving parameter associated with the vehicle and stored in a computer memory and/or data on the position and speed of said vehicle (40).

7. Maintaining method according to any one of Claims 1 to 6, also comprising a step of establishing a correspondence between the first identification element (IP₁) and the second identification element (IP₂).

8. Maintaining method according to any one of Claims 1 to 7, wherein the first identification element (IP₁) corresponds to a first IP address and the second identification element (IP₂) corresponds to a second IP address.

9. Maintaining method according to any one of Claims 1 to 8, wherein the step of determining the second local area communication network (40) is performed within a server of the infrastructure (20).

10. Maintaining method according to any one of Claims 1 to 8, wherein the step of determining the second local area communication network (40) is performed within a computer of the vehicle (10).

11. Maintaining method according to any one of Claims 1 to 10, wherein, in the determining step, provision is made to determine a plurality of second local area communication networks (40ᵢ) potentially covering the second section of the route.

12. Device for maintaining a wireless connection between a vehicle (10) and an infrastructure (20) on a route along which there are local area communication networks (30, 40) that allow communication to be established between the vehicle (10) and the infrastructure (20), said device comprising an item of user equipment (11) suitable for exchanging data with the infrastructure (20), a means for determining the position of the vehicle (10), and a computer memory which stores a road map database and a radiofrequency and cellular infrastructure database, the device comprising:
- at least one data processing unit that is suitable for implementing the following steps when said vehicle (10) is initially located within the coverage area of a first local area communication network (30), it is identified by this first local area communication network by a first identification element (IP₁), and it communicates with the infrastructure (20) via a first communication port:
- determining at least one second local area communication network (40) potentially covering a subsequent section of the route of the vehicle,
- generating a second identification element (IP₂) of the vehicle (10) associated with the second local area communication network (40),
- allocating at least one second communication port for establishing data transmission between the vehicle (10) and the infrastructure (20) within the coverage area of the second local area communication network (40),
- searching for the beginning of the coverage area of the second local area communication network (40), then
- when the vehicle (10) enters the coverage area of the second local area communication network (40), establishing communication between the vehicle (10) and the infrastructure (20) via the second communication port, using the second identification element (IP₂).
